(19) Europäisches Patentamt
European Patent Office
Office européen des brevets

(11) **EP 4 286 419 A1**

(12) **EUROPEAN PATENT APPLICATION**
published in accordance with Art. 153(4) EPC

(43) Date of publication:
**06.12.2023 Bulletin 2023/49**

(21) Application number: **22780384.8**

(22) Date of filing: **23.03.2022**

(51) International Patent Classification (IPC):
*C08F 2/24* (2006.01) *B29C 41/14* (2006.01)
*B29C 41/36* (2006.01) *C08F 2/00* (2006.01)
*C08F 36/18* (2006.01)

(52) Cooperative Patent Classification (CPC):
**B29C 41/14; B29C 41/36; C08F 2/00; C08F 2/24; C08F 36/18**

(86) International application number:
**PCT/JP2022/013537**

(87) International publication number:
**WO 2022/210169 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021057803**

(71) Applicant: **Denka Company Limited**
**Tokyo 103-8338 (JP)**

(72) Inventors:
• **KIYOFUJI, Gaito**
**Tokyo 103-8338 (JP)**
• **TOMIZAWA, Seiya**
**Tokyo 103-8338 (JP)**
• **KOBAYASHI, Naoki**
**Tokyo 103-8338 (JP)**

(74) Representative: **Gulde & Partner**
**Patent- und Rechtsanwaltskanzlei mbB**
**Wallstraße 58/59**
**10179 Berlin (DE)**

(54) **METHOD FOR MANUFACTURING CHLOROPRENE-BASED POLYMER COMPOSITION, CHLOROPRENE-BASED POLYMER COMPOSITION, DIP-MOLDED BODY AND METHOD FOR MANUFACTURING DIP-MOLDED BODY**

(57) A method for producing a chloroprene-based polymer composition, by which a polymerization solution that has a sufficiently high polymer concentration in the resulting polymerization can be obtained and a target solid content concentration can be reached in a short time; the formation of aggregates during polymerization can be to suppressed; and a chloroprene-based polymer composition having high stability after polymerization and hardly generating aggregates can be obtained, at the same time, is provided.

According to the present invention, a method for producing a chloroprene-based polymer composition containing chloroprene-based polymer, comprising a polymerization step, wherein: in the polymerization step, chloroprene, or chloroprene and a monomer copolymerizable with chloroprene, are polymerized until reaching polymerization completion conversion; the polymerization step includes a monomer addition step and an emulsifier addition step, when a total amount of monomer used in the polymerization step is 100%, an initial addition amount of monomer at start of polymerization is X%; in the monomer addition step, when the initial addition amount of the monomer is 100%, a remaining monomer is added to the polymerization system from time when polymerization progresses and Y% of the monomer initially added converts, by reaching the polymerization completion conversion; in the emulsifier addition step, when the total amount of monomer used in the polymerization step is 100%, emulsifier is added from time when polymerization progresses and Z% of the monomer converts by reaching the polymerization completion conversion; and X, Y and Z satisfy following relationship.

$$1 \leq XY/100 \leq 40$$

$$20 \leq Z \leq 75$$

$$-65 \leq Y-Z \leq 50$$

**Description**

**TECHNICAL FIELD**

The present invention relates to a method for producing a chloroprene-based polymer composition, a chloroprene-based polymer composition, an immersion molded body, and a method for producing an immersion molded body.

**BACKGROUND ART**

Conventionally, when polymerizing a chloroprene-based polymer, chloroprene and, if necessary, a monomer copolymerizable with chloroprene are charged all at once, and emulsion polymerization or solution polymerization is performed.

The polymerization rate during the polymerization of the chloroprene-based polymer is generally controlled by the amount of initiator added. However, when the polymerization rate is too fast, there is a problem that the heat in the system cannot be removed in time, making it difficult to control the polymerization.

The cooling efficiency can be increased by increasing the amount of water in the system in the case of emulsion polymerization, and by increasing the amount of solvent in the case of solution polymerization. However, when the amount of water or solvent is increased, the concentration of the polymer in the polymerization solution obtained after the completion of polymerization will decrease, and as a result, the time and energy spent to remove the water and solvent from the polymerization solution may increase. Moreover, there is a problem that the recovery efficiency of the polymer from the polymerization solution is lowered.

Regarding a method for producing a chloroprene-based polymer composition, Patent Literature 1 discloses that in polymerizing chloroprene, or chloroprene and a monomer copolymerizable with chloroprene, the polymerization is started with setting an initial addition amount of monomer to 10 to 50% with respect to a total monomer and the remaining monomer cooled to a temperature of -20 to 0°C is continuously added to polymerization system by small amount to polymerize the polychloroprene-based polymer from the time when the polymerization progresses so that a conversion of monomer with respect to the total monomer is 1 to 40% until reaching polymerization completion conversion.

**CITATION LIST**

**PATENT LITERATURE**

Patent Literature 1 JP 4238021 B2

**SUMMARY OF INVENTION**

**TECHNICAL PROBLEM**

However, in the conventional method for producing a chloroprene-based polymer composition, it was not possible to simultaneously achieve the following:

- to obtain a polymerization solution that has a sufficiently high polymer concentration in the resulting polymerization and can reach a target solid content concentration in a short time;
- to suppress the formation of aggregates during polymerization; and
- to obtain a chloroprene-based polymer composition having high stability after polymerization and hardly generating aggregates.

The present invention was made in view of such circumstances and provided a method for producing a chloroprene-based polymer composition, by which a polymerization solution that has a sufficiently high polymer concentration in the resulting polymerization can be obtained and a target solid content concentration can be reached in a short time; the formation of aggregates during polymerization can be to suppressed; and a chloroprene-based polymer composition having high stability after polymerization and hardly generating aggregates can be obtained, at the same time.

**SOLUTION TO PROBLEM**

According to the present invention, a method for producing a chloroprene-based polymer composition containing chloroprene-based polymer, comprising a polymerization step, wherein:

in the polymerization step, chloroprene, or chloroprene and a monomer copolymerizable with chloroprene, are polymerized until reaching polymerization completion conversion;

the polymerization step includes a monomer addition step and an emulsifier addition step,

When a total amount of monomer used in the polymerization step is 100%, an initial addition amount of monomer at start of polymerization is X%;

in the monomer addition step, when the initial addition amount of the monomer is 100%, a remaining monomer is added to the polymerization system from time when polymerization progresses and Y% of the monomer initially added converts, by reaching the polymerization completion conversion;

in the emulsifier addition step, when the total amount of monomer used in the polymerization step is 100%, emulsifier is added from time when polymerization progresses and Z% of monomer converts by reaching the polymerization completion conversion; and

X, Y and Z satisfy following relationship,

$$1 \leq XY/100 \leq 40$$

$$20 \leq Z \leq 75$$

$$-65 \leq Y-Z \leq 50$$

is provided.

As a result of intensive studies, the present inventors found that in a method for producing a chloroprene-based polymer composition, by setting timing and amount of addition of monomer and timing and amount of addition of emulsifier during polymerization to a specific timing and amount, the particle size, number, and aggregation degree of the chloroprene-based polymer particles in the resulting polymerization solution and composition can be highly controlled, and to obtain a polymerization solution that has a sufficiently high polymer concentration in the resulting polymerization and can reach a target solid content concentration in a short time; to suppress the formation of aggregates during polymerization; and to obtain a chloroprene-based polymer composition having high stability after polymerization and hardly generating aggregates, is achived at the same time, thereby completing the present invention.

Various embodiments of the present invention are illustrated below. The embodiments shown below can be combined with each other.

Preferably, monomer concentration in a reaction solution at start of polymerization is less than 55.0% by mass;

emulsifier concentration in the reaction solution at start of polymerization is 0.1 to 5.7% by mass;

chloroprene-based polymer concentration in a polymerization solution at end of polymerization is 45.0% by mass or more; and

emulsifier concentration in the polymerization solution at end of polymerization is 2.4% by mass or more.

Preferably, the emulsifier comprises an alkali metal salt of rosin acid containing any one of dehydroabietic acid and dehydroabietic acid salt.

According to another aspect of the present invention, A chloroprene-based polymer composition obtained by the method for producing the chloroprene-based polymer composition described above, is provided.

According to another aspect of the present invention, an immersion molded body comprising the chloroprene-based polymer composition, described above, is provided.

Preferably, the immersion molded body is a glove, a balloon, a catheter or a boot.

According to another aspect of the present invention, a method for producing an immersion molded body, comprising a step of immersion-molding the chloroprene-based polymer composition obtained by the method for producing the chloroprene-based polymer composition described above.

**EFFECT OF THE INVENTION**

According to the present invention, a method for producing a chloroprene-based polymer composition, by which a polymerization solution that has a sufficiently high polymer concentration in the resulting polymerization can be obtained and a target solid content concentration can be reached in a short time; the formation of aggregates during polymerization can be to suppressed; and a chloroprene-based polymer composition having high stability after polymerization and hardly generating aggregates can be obtained, at the same time, is provided.

**DESCRIPTION OF EMBODIMENTS**

Hereinafter, the present invention will be described in detail by exemplifying embodiments of the present invention. The present invention is not limited by these descriptions. The various features of the embodiments of the present invention shown below can be combined with each other. In addition, the invention can be made independently for each feature.

1. Chloroprene-based Polymer

The chloroprene-based polymer according to the present invention means a polymer containing a monomer unit derived from 2-chloro-1,3-butadiene (hereinafter referred to as chloroprene). The chloroprene-based polymer according to the present invention is a homopolymer of chloroprene or a copolymer of a chloroprene monomer and other monomers copolymerizable therewith.

Examples of the monomer copolymerizable with chloroprene monomer include 2,3-dichloro-1,3-butadiene, 1-chloro-1,3-butadiene, butadiene, isoprene, styrene, acrylonitrile, acrylic acid or esters thereof, methacrylic acid, or esters thereof, and the like. These may be used alone, or two or more of these may be used in combination. Although it is not particularly limited, from the viewpoint of maintaining the properties derived from chloroprene, the chloroprene-based polymer according to one embodiment of the present invention has 70% by mass or more, more preferably 80% by mass or more, and even more preferably 90% by mass or more of a monomer unit derived from chloroprene monomer with respect to 100% by mass of the chloroprene-based polymer

2. Method for Producing Chloroprene-Based Polymer Composition

The chloroprene-based polymer composition according to the present invention contains the chloroprene-based polymer.

The method for producing a chloroprene-based polymer composition according to the present invention comprises a polymerization step, wherein in the polymerization step, chloroprene, or chloroprene and a monomer copolymerizable with chloroprene, are polymerized until reaching polymerization completion conversion.

The polymerization step according to the present invention includes a monomer addition step and an emulsifier addition step.

2.1 Polymerization Step

In the polymerization step, chloroprene, or chloroprene and a monomer copolymerizable with chloroprene, are polymerized until reaching polymerization completion conversion. Here, the polymerization completion conversion means the conversion of the monomer at the end of the polymerization step, that is, an amounts of the monomer converted by the end of the polymerization when the total amount of monomer used in the polymerization step is 100%. In the polymerization step according to the present invention, chloroprene, or chloroprene and a monomer copolymerizable with chloroprene, is polymerized until a predetermined target polymerization completion conversion is reached, and when the polymerization completion conversion is reached, the polymerization is terminated by adding a polymerization terminator.

Although not particularly limited, the polymerization step of the chloroprene-based polymer can be terminated before conversion of the monomer reaches 100%. That is, the polymerization completion conversion may be 100% or less, less than 100%, and 60 to 95%. By setting the polymerization completion conversion within the above numerical range, it is possible to suppress the decrease in adhesive strength and the formation of gel. The polymerization completion conversion may be, for example, 60, 65, 70, 75, 80, 85, 90, 95%, may be in the range between the two values exemplified herein.

In the polymerization step according to the present invention, when a total amount of monomer used in the polymerization step is 100%, an initial addition amount of monomer at start of polymerization is X%.

In the monomer addition step, when the initial addition amount of monomer is 100%, the remaining monomer is added to the polymerization system from time the polymerization progresses and Y% of the monomer initially added converts by reaching the polymerization completion conversion.

In the emulsifier addition step, when the total amount of monomer used in the polymerization step is 100%, the emulsifier is added from the time when at polymerization progresses and Z% of the monomer converts by reaching the polymerization completion conversion.

That is, in the polymerization step according to the present invention, first, a specific initial addition amount of the monomer is added into the polymerization system to start polymerization, and then the remaining monomer is added from the specific timing by the end of the polymerization, and the emulsifier is added from a specific timing by the end of the polymerization.

In addition, the timing of starting addition of the monomer and the timing of starting addition of the emulsifier are specified to have a specific relationship with the degree of polymerization progress, and the timing of starting addition of the monomer and the timing of starting addition of the emulsifier are specified so that they have a specific relationship. According to the present invention, by specifying these, to obtain a polymerization solution that has a sufficiently high polymer concentration in the resulting polymerization and can reach a target solid content concentration in a short time; to suppress the formation of aggregates during polymerization; and to obtain a chloroprene-based polymer composition having high stability after polymerization and hardly generating aggregates, is achived at the same time.

2.2 Start of Polymerization Step

In the polymerization step according to the present invention, first, raw materials containing a monomer are added to the polymerization system to prepare a reaction solution.

<Monomer>

Examples of the monomer include chloroprene monomer described above and a monomer copolymerizable with chloroprene monomer.

Here, when the total amount of monomer used in the polymerization step is 100%, the initial addition amount at the start of polymerization is X%.

The initial addition amount X% is preferably 5 to 50%, more preferably 10 to 40%, even more preferably 10 to 35%.

The initial addition amount X% may be, for example, 5, 10, 15, 20, 25, 30, 35, 40, 45, 50% and may be in the range between the two values exemplified herein.

monomer concentration in a reaction solution at start of polymerization is less than 55% by mass. The monomer concentration in the polymerization solution at the start of polymerization can be, for example, 20, 25, 30, 35, 40, 45, 50, 54% by mass may be in the range between the two values exemplified herein.

By setting the amount of the monomer in the polymerization solution at the start of polymerization to the above upper limit or less, it is possible to suppress the rapid progress of polymerization in the initial stage of the polymerization reaction, to suppress the generation of aggregates in the polymerization solution, and to increase the chloroprene-based polymer concentration in the polymerization solution finally obtained.

The reaction solution at the start of polymerization contains a monomer, and may further contain water, an emulsifier, a pH regulator, a polymerization initiator, a chain transfer agent, and the like.

<Emulsifier>

The reaction solution at the start of polymerization may contain an emulsifier.

The emulsifier is not particularly limited, and a known anionic, nonionic, and cationic emulsifier used in polymerization of chloroprene-based polymers can be used.

Examples of the anionic emulsifier include carboxylic acid type, sulfonic acid type, sulfate ester type, for example, higher fatty acid salts, alkenyl succinates, alkali metal salts of rosin acid, and alkyl sulfonates having 8 to 20 carbon atoms, alkylaryl sulfates, condensates of sodium naphthalenesulfonate and formaldehyde, and the like.

Examples of the nonionic emulsifier include polyvinyl alcohol or copolymers thereof (for example, copolymers with acrylamide), polyvinyl ethers or copolymers thereof (for example, copolymers with maleic acid), polyvinylpyrrolidone or copolymers thereof (for example, a copolymer with vinyl acetate), and compounds obtained by chemically modifying these (co)polymers, a cellulose based derivative (hydroxyethyl cellulose), and the like.

Examples of the cationic emulsifier include aliphatic amine salts, aliphatic quaternary ammonium salts, and the like, and, for example, octadecyltrimethylammonium chloride, dodecyltrimethylammonium chloride, dilauryldimethylammonium chloride and the like.

Among these, the emulsifier preferably contains rosin acid or an alkali metal salt of rosin acid. Moreover, the rosin acid or the alkali metal salt of rosin acid preferably contains any one of dehydroabietic acid and dehydroabietic acid salt. These may be used alone, or two or more of these may be used in combination.

The emulsifier concentration in the reaction solution at the start of polymerization is preferably 0.1 to 5.7% by mass, more preferably 1.0 to 5.5% by mass. The emulsifier concentration in the reaction solution at the start of polymerization is, for example, 0.1, 0.5, 1.0, 1.5, 2.0, 2.5, 3.0, 3.5, 4.0, 4.5, 5.0, 5.5, 5.7% by mass, and may be within a range between any two of the values exemplified herein.

The total amount of emulsifier used in the polymerization step can be 2.0 to 7.5 parts by mass, and is preferably 2.5 to 7.0 parts by mass with respect to 100 parts by mass of the total amount of monomer used in the polymerization step. The total amount of emulsifier used in the polymerization step is, for example, 2.0, 2.5, 3.0, 3.5, 4.0, 4 with respect to 100 parts by mass of total amount of monomer used in the polymerization step..5, 5.0, 5.5, 6.0, 6.5, 7.0, 7.5 parts by mass within the range between any two of the values exemplified herein.

The initial addition amount of the emulsifier at the start of polymerization can be 1.0 to 5.5 parts by mass and is preferably 1.5 to 5.0 parts by mass with respect to 100 parts by mass of a total amount of monomer used in the polymerization step. The initial addition amount of the emulsifier is, for example, 1.0, 1.5, 2.0, 2.5, 3.0, 3.5, 4.0, 4.5, 5.0, 5.5 parts by mass and may be in the range between the two values exemplified herein.

The initial addition amount of the emulsifier at the start of polymerization can be 50 to 90% by mass, preferably 60 to 80% by mass, with respect to 100% by mass of a total amount of emulsifier used in the polymerization step. The initial addition amount of the emulsifier can be, for example, 50, 55, 60, 65, 70, 75, 80, 85, 90% by mass with respect to 100% by mass of the total amount of emulsifier used in the polymerization step and may be in the range between the two values exemplified herein.

By setting the amount of the emulsifier at the start of polymerization equal to or greater than the above lower limit, it is possible to suppress the generation of aggregates. Moreover, by setting the amount of the emulsifier to the above upper limit or less, the number of chloroprene-based polymer particles that are initially formed can be suppressed, and the stability of the chloroprene-based polymer composition can be maintained.

<pH Regulator>

The raw materials added to the polymerization system at the start of polymerization may contain a pH regulator. Examples of the pH regulator include potassium pyrosulfite, potassium sulfite, potassium hydrogen sulfite, potassium phosphate, potassium hydrogen phosphate, sodium pyrosulfite, sodium sulfite, sodium hydrogen sulfite, sodium phosphate, sodium hydrogen phosphate, potassium hydroxide, sodium hydroxide, and the like. These pH regulators may be used alone or in combination of two or more.

Among these pH regulators, potassium hydroxide and sodium hydroxide are preferred because they are highly effective in increasing the pH value.

The amount of the pH regulator to be added can be 0.01 to 2.0 parts by mass with respect to 100 parts by mass of the total amount of monomer used in the polymerization step.

<Polymerization Initiator>

The raw materials added to the polymerization system at the start of polymerization may contain a polymerization initiator. Examples of the polymerization initiator include potassium persulfate, benzoyl peroxide, ammonium persulfate, hydrogen peroxide, and the like, which are commonly used in radical polymerization.

The amount of the polymerization initiator to be added can be 0.001 to 1 part by mass with respect to 100 parts by mass of total amount of monomer used in the polymerization step.

<Chain Transfer Agent>

The chain transfer agent is not particularly limited as long as it is commonly used in the production of chloroprene-based polymers. Examples include known chain transfer agents, for example, long-chain alkylmercaptans such as n-dodecylmercaptan, tertdodecylmercaptan, and n-octylmercaptan, dialkyl xanthogen disulfides such as diisopropyl xanthogen disulfide and diethyl xanthogen disulfide, iodoform, and the like.

The amount of the chain transfer agent to be added can be 0.001 to 10 parts by mass with respect to 100 parts by mass of the total amount of monomer used in the polymerization step.

In some cases, control to the target molecular weight may be more easily achieved by adding the chain transfer agent to the polymerization system at the start of the polymerization as the initial addition and at another timing after that, for example, at the time of the monomer addition step separately similar to the monomer described later.

A preliminary test can determine whether the entire amount of the chain transfer agent is added at the start of polymerization, or the chain transfer agent is added decidedly at the start of polymerization and a post-addition.

<Polymerization temperature>

The polymerization temperature is preferable in the range of 0 to 55°C from the viewpoint of easy control of the reaction. From the viewpoint of conducting the polymerization reaction more smoothly and safely, it is preferable to set the lower limit of the polymerization temperature to 10°C or higher and the upper limit to 45°C or lower.

2.3 Monomer Addition Step

In the monomer addition step, when the initial addition amount of the monomer is 100%, the remaining monomer is added to the polymerization system from time the polymerization progresses and Y% of the monomer initially added converts by reaching the polymerization completion conversion. Y % may be 5 to 95%, preferably 20 to 90%, more preferably 40 to 85%. Y% may be, for example, 5, 10, 15, 20, 25, 30, 35, 40, 45, 50, 55, 60, 65, 70, 75, 80, 85, 90, 95% and may be in the range between the two values exemplified herein.

The following relationship is satisfied between Y % and the initial addition amount X % of the monomer at the start of polymerization when the total amount of monomer used in the polymerization step is 100%.

$$1 \leq XY/100 \leq 40$$

Here, XY/100 indicates the conversion of the monomer when the total amount of monomer used in the polymerization step is 100%. That is, in the monomer addition step according to the present invention, at the time when the conversion of the monomer with respect to 100% of the total amount of monomer used in the polymerization step is within the range specified by the above formula, the addition of the remaining monomer may begin. XY/100 can be, for example, 1, 5, 10, 15, 20, 25, 30, 35, 40, and may be in the range between the two values exemplified herein.

When XY/100 is equal to or more than the above lower limit, the addition of the remaining monomer can be started at the time when the polymerization of the monomer has progressed appropriately, and rapid progress of the polymerization reaction can be prevented.

Further, when XY/100 is equal to or less than the above upper limit, a stable reaction rate can be maintained, the polymer concentration at the end of polymerization can be increased, the generation of aggregates during polymerization can be suppressed, and a highly stable chloroprene-based polymer composition can be obtained.

In the monomer addition step, the remaining monomer can be dividedly added once or multiple times or can be added continuously at a constant flow rate.

When dividedly added, the remaining monomer is preferably dividedly added twice or more.

When continuously added, the monomer is preferably added at a rate of 4.0 to 64.0%/hour with respect to 100% by mass of the monomer used in the polymerization step.

In the monomer addition step according to one embodiment of the present invention, the monomer is preferably added so that the monomer concentration in the reaction solution is always 70% by mass or less, and more preferably always 60% by mass or less.

The monomer added in the monomer addition step is preferably cooled to a temperature lower than the polymerization temperature. By subsequently adding the monomer cooled to a temperature lower than the polymerization temperature, the temperature in the polymerization system can be lowered, and as a result, the polymerization time can be shortened. The temperature of the monomer added in the monomer addition step is preferably lower than the polymerization temperature, and from the viewpoint of the melting point of chloroprene (-130°C) and the prevention of polymerization, the temperature of the monomer added to the polymerization system is -120 to 20°C is preferred. From an economical point of view, it is more preferably -50 to 20°C, and most preferably -20 to 0°C.

2.4 Emulsifier Addition Step

In the emulsifier addition step, when the total amount of monomer used in the polymerization step is 100%, the emulsifier is added from the time when at polymerization progresses and Z% of monomer converts by reaching the polymerization completion conversion.

Examples of the emulsifier added in the emulsifier addition step include the emulsifiers described above, and it is preferable to include rosin acid or an alkali metal salt of rosin acid. Moreover, the rosin acid or the alkali metal salt of rosin acid preferably contains any one of dehydroabietic acid and dehydroabietic acid salt. These may be used alone or in combination of two or more.

Here, Z satisfies the following formula.

$$20 \leq Z \leq 75$$

Z% can be, for example, 20, 25, 30, 35, 40, 45, 50, 55, 60, 65, 70, 75% and may be in the range between the two values exemplified herein.

By setting Z equal to or higher than the above lower limit and adding the emulsifier after a certain amount of the monomer have converted, it is possible to prevent an excessive increase in the number of particles of the chloroprene-based polymer and an increase in particles having a high specific surface area and poor stability in the polymerization system. In addition, by making Z equal to or less than the above upper limit, aggregation due to contact between particles of the produced chloroprene-based polymer can be suppressed, it is possible to obtain a chloroprene-based polymer composition that has a high polymer concentration at the end of polymerization, can suppress the generation of aggregates during polymerization, and has high stability.

Further, when the initial addition amount is 100%, the conversion Y% of the initially added monomer at the time when the monomer addition step can be started and the above Z% satisfy the following relationship.

$$-65 \leq Y\text{-}Z \leq 50$$

Y-Z is, for example, -65, -60, -55, -50, -45, -40, -35, -30, -25, -20, -15, -10, -5, 0, 5, 10, 15, 20, 25, 30, 35, 40, 45, 50, and may be in the range between any two of the numbers exemplified herein.

By setting Y-Z to the above lower limit or more, the addition of the emulsifier is not too late with respect to the progress of the polymerization of the initially added monomer, and aggregation of the produced chloroprene-based polymer particles can be prevented.

In addition, by setting Y-Z to the above upper limit or less, the addition of the emulsifier is not too early with respect to the progress of the polymerization of the initially added monomer, and it is possible to prevent an excessive increase in the number of particles of the chloroprene-based polymer and an increase in particles having a high specific surface area and poor stability.

In the emulsifier addition step, the remaining emulsifier can be dividedly added once or twice or more times, or can be added continuously at a constant flow rate.

When dividedly added, the remaining emulsifier can be added at once, or can be dividedly added in two or more times.

In the case of continuous addition, the emulsifier is preferably added at a rate of 0.1 to 45 parts by mass/hour with respect to 100 parts by mass of the total amount of monomer used in the polymerization step

2.5 Completion of the Polymerization Step

In the polymerization step according to the present invention, when the conversion of the monomer reaches the polymerization completion conversion, the polymerization is stopped by adding a polymerization terminator, and a reaction-completed polymerization solution can be obtained.

<Polymerization Terminator>

As the polymerization terminator, for example, thiodiphenylamine, 4-tert-butylcatechol, 2,2'-methylenebis-4-methyl-6-tert-butylphenol and the like can be used.

<Removal of Unreacted Monomer>

After the emulsion polymerization is completed, unreacted monomers are removed from the polymerized solution after the polymerization is completed to obtain a chloroprene-based polymer composition by a conventional method such as steam stripping or reducedpressure heating evaporation.

The chloroprene-based polymer concentration in the polymerization solution at the end of polymerization is preferably 45% by mass or more, more preferably 50% by mass or more. The chloroprene-based polymer concentration in the polymerization solution at the end of the polymerization can be, for example, 45, 50, 55, 60, 65, 70% by mass, and may be in the range between the two values exemplified herein.

After completion of the polymerization, the polymer solution is heated at 70°C under reduced pressure to remove unreacted monomer components. After the step of removing the monomer, if the solid content of the polymerization solution is less than 60%, it is again heated at 70°C under reduced pressure and concentrated until the target solid content of 60% is reached. At this time, the time required for concentration is preferably within 1 hour.

The emulsifier concentration in the polymerization solution at the end of polymerization is preferably 2.4% by mass or more. The emulsifier concentration in the polymerization solution at the end of the polymerization can be, for example, 2.4, 2.5, 3.0, 3.5, 4.0, 4.5% by mass and may be in the range between the two values exemplified herein.

The amount of aggregates in the polymerization solution at the end of polymerization is preferably 0.8% or less, more preferably 0.7% or less, and even more preferably 0.6% or less. The amount of aggregates in the polymerization solution at the end of polymerization is a comprehensive evaluation of the amount of aggregates generated in the system from the start of polymerization to the end of polymerization, and can be evaluated by the method described in Examples.

The mechanical stability in the polymerization solution at the end of polymerization is preferably 1% or less, more preferably 0.9% or less, and even more preferably 0.8% or less. The mechanical stability in the polymerization solution at the end of polymerization can be evaluated by the method described in Examples.

3. Chloroprene-based polymer composition

A chloroprene-based polymer composition according to one embodiment of the present invention is obtained by the production method described above.

In the chloroprene-based polymer composition according to one embodiment of the present invention, by setting the timing and amount of addition of the monomer and the timing and amount of addition of the emulsifier during polymerization to specific timing and amount, the particle size, number and degree of aggregation of the chloroprene-based polymer particles of the chloroprene-based polymer in the composition are highly controlled and the composition can be highly stable.

4. Immersion Molded Body

An immersion molded body according to one embodiment of the present invention comprises the chloroprene-based polymer composition described above.

Also, the immersion molded body is preferably a glove, a balloon, a catheter or a boot.

The immersion molded body of the present embodiment contains the chloroprene-based polymer composition described above, and further includes a vulcanizing agent and/or a vulcanization accelerator, a filler or reinforcing agent, a plasticizer, a processing aid or lubricant, and an antioxidant, silane coupling agent, and the like. These agents can be appropriately selected from known materials depending on the purpose and application.

5. Method for Producing Immersion Molded Body

A method for producing an immersion molded body according to one embodiment of the present invention comprises a step of immersion-molding the chloroprene-based polymer composition obtained by the above-described method for producing the chloroprene-based polymer composition. As a method for producing the immersion molded body of the present embodiment, for example, a coagulation liquid immersion method can be mentioned, but the method is not limited to this, and molding may be performed according to a conventional method.

**EXAMPLES**

The present invention will be described in more detail below based on Examples, but the present invention should not be construed as being limited to these Examples.

(Example 1)

To a polymerization can with an internal volume of 50 L, 30 parts by mass of chloroprene monomer, 0.14 parts by mass of n-dodecyl mercaptan, 62.6 parts by mass of pure water, 2.5 parts by mass of disproportionated rosin (manufactured by ARAKAWA CHEMICAL INDUSTRIES, LTD., product name: RONDI K-25), 0.47 parts by mass of potassium hydroxide, and 1.5 parts by mass of sodium salt of β-naphthalenesulfonic acid formalin condensate (manufactured by Kao Corporation, trade name: DEMOL N) were added. After adding 0.1 part by mass of potassium persulfate as a polymerization initiator, polymerization was started at a polymerization temperature of 40°C under a nitrogen stream. The conversion was estimated by accumulating the heat of polymerization, and when the conversion reached 80% with respect to the initial addition amount of 100% of the chloroprene monomer, the addition of the remaining monomer was started. Addition was carried out continuously at a rate of 20%/hour with respect to 100% by mass of monomer used in the polymerization step. The conversion was estimated by accumulating the heat of polymerization, and when the conversion reached 60%, disproportionated rosin was added as the remaining emulsifier. When the polymerization rate reached 95%, which is the polymerization completion conversion, diethylhydroxylamine as a polymerization terminator was added to terminate the polymerization. Unreacted monomers were removed under reduced pressure to obtain a chloroprene-based polymer composition having a solid content of 60%.

(Examples 2 to 6, Comparative Examples 1 to 8)

Each of the chloroprene-based polymer composition was obtained in the same manner as in Example 1 except that the amount of chloroprene monomer and the amount of rosin acid at the start of polymerization, the amount and the timing of starting addition of divided addition of the monomer, and the amount and the timing of starting addition of divided addition of rosin acid were set as shown in Table 1. In Comparative Example 5, the amount of pure water added was 317 parts by mass.

In "Divided addition of monomer" and "Divided addition of emulsifier", DA and N respectively represent the following.

DA: monomer (emulsifier) was dividedly added.

N: monomer (emulsifier) was not dividedly added.

(Mechanical Stability of Polymerization Solution)

The mechanical stability of the polymerization solution was measured according to JIS K 6392 using a Maron mechanical stability tester by the following method.

Procedure: After removing impurities by filtering the sampled polymerization solution with a wire mesh, the filtered polymerization solution was adjusted to 20°C, and 50 g was weighed into a test container. The test container was mounted on the tester, and the measurement was performed for 10 minutes with a load of 10 kg. After the measurement, the sample in the test container was filtered through an 80-mesh wire mesh, which was dried in advance at 125°C for 1 hour and allowed to cool in a desiccator, and the 80-mesh wire mesh and precipitate were dried in a dryer at 125°C for 1 hour, allowed to cool in a desiccator, and the 80-mesh wire mesh and precipitate were weighed. Also, the total solid content (unit: %) of the sampled chloroprene-based polymer composition was determined according to JIS K 6387. Next, the coagulation rate (unit: % by mass) of the polymerization solution was obtained using the following formula.

$$[(\text{Mass of 80-mesh wire mesh and precipitate after drying (unit: g)}) - (\text{Mass of 80-mesh wire mesh (unit: g)})] / [50 \times ((\text{Total solid content of polymerization solution (unit: \% by mass)})/100)] \times 100$$

The obtained coagulation rate of the polymerization solution was defined as the mechanical stability of the polymerization solution.

(Aggregate Amount in Polymerization Solution)

The polymerization solution was filtered through a 200-mesh wire mesh, the 200-mesh wire mesh and the precipitate were dried in a drier at 125°C for 1 hour, allowed to cool in a desiccator, and the 200-mesh wire mesh and the precipitate were weighed. In addition, the total solid content (unit: %) of the sampled polymerization solution was determined according to JIS K 6387. Next, the aggregate amount (unit: % by mass) in the polymerization solution was determined using the following formula.

$$[(\text{Mass of 200-mesh wire mesh and precipitate after drying (unit: g)}) - (\text{Mass of 200-mesh wire mesh (unit: g)})] / [50 \times ((\text{Total solid content of polymerization solution (unit: \% by mass)})/100)] \times 100$$

(Concentration Time Required to Reach Target Solid Content)

The resulting polymerization solution was heated at 70°C under reduced pressure to remove unreacted monomers, then heated again to 70°C, and the time required to reach the target solid content of 60% was measured. The polymerization solution according to the Examples reached the target solid content concentration when the unreacted monomer was removed, so additional concentration was not required.

[Table 1]

Table 1

| Table 1 | | | | Example | | | | | | Comparative Example | | | | | | | |
|---|---|---|---|---|---|---|---|---|---|---|---|---|---|---|---|---|---|
| | | | | 1 | 2 | 3 | 4 | 5 | 6 | 1 | 2 | 3 | 4 | 5 | 6 | 7 | 8 |
| Monomer | | Divided addition of monomer | | DA | DA | DA | DA | DA | DA | DA | DA | DA | DA | N | N | DA | DA |
| | | Initial addition amount X with respect to 100% of total amount of monomer used in polymerization step | % | 30 | 21 | 30 | 21 | 21 | 21 | 21 | 21 | 21 | 21 | 100 | 100 | 80 | 30 |
| | | Addition amount in monomer addition step with respect to 100% of total amount of monomer used in polymerization step | % | 70 | 79 | 70 | 79 | 79 | 79 | 79 | 79 | 79 | 79 | 0 | 0 | 20 | 70 |
| | | Polymerization conversion Y of initially added monomer with respect to 100% of initial addition amount at start of monomer addition step | % | 80 | 50 | 70 | 80 | 80 | 25 | 5 | 25 | 70 | 70 | - | - | 70 | 15 |
| | | XY/100 | | 24 | 10.5 | 21 | 16.8 | 16.8 | 5.25 | 1.05 | 5.25 | 14.7 | 14.7 | | | 56 | 4.5 |

(continued)

| Table 1 | | | | Example | | | | | | Comparative Example | | | | | | | |
|---|---|---|---|---|---|---|---|---|---|---|---|---|---|---|---|---|---|
| | | | | 1 | 2 | 3 | 4 | 5 | 6 | 1 | 2 | 3 | 4 | 5 | 6 | 7 | 8 |
| Formulation | Emulsifier | Divided addition of emulsifier | | DA | DA | DA | DA | DA | DA | DA | DA | N | N | N | N | DA | N |
| | | Initial addition amount with respect to 100 parts by mass of total amount of monomer used in polymerization step | Parts by mass | 4.0 | 4.0 | 4.0 | 4.0 | 4.0 | 4.0 | 4.0 | 4.0 | 5.5 | 4.0 | 4.0 | 5.5 | 4.0 | 4.0 |
| | | Addition amount in emulsifier addition step with respect to total amount of monomer used in polymerization step | Parts by mass | 1.5 | 1.5 | 1.5 | 1.5 | 1.5 | 1.5 | 1.5 | 1.5 | - | - | - | - | 1.5 | - |
| | | Monomer conversion Z with respect to 100% of total amount of monomer at start of emulsifier addition step | % | 60 | 60 | 70 | 40 | 60 | 70 | 75 | 80 | - | - | - | - | 75 | - |
| | | Y-Z | | 20 | -10 | 0 | 40 | 20 | -45 | -70 | -55 | | | | | -5 | |

(continued)

**Table 1**

| | | | Example | | | | | | Comparative Example | | | | | | | |
|---|---|---|---|---|---|---|---|---|---|---|---|---|---|---|---|---|
| | | | 1 | 2 | 3 | 4 | 5 | 6 | 1 | 2 | 3 | 4 | 5 | 6 | 7 | 8 |
| At start of polymerization | monomer concentration | % by mass | 30.7 | 23.7 | 30.7 | 23.7 | 23.7 | 23.7 | 23.7 | 23.7 | 22.2 | 23.7 | 23.7 | 57.6 | 54.1 | 25.0 |
| | emulsifier concentration | % by mass | 4.1 | 4.5 | 4.1 | 4.5 | 4.5 | 4.5 | 4.5 | 4.5 | 5.8 | 4.5 | 0.9 | 3.2 | 2.7 | 3.4 |
| At end of polymerization | polymer concentration | % by mass | 53.0 | 53.0 | 53.0 | 53.0 | 53.0 | 53.0 | 53.0 | 53.0 | 53.0 | 52.9 | 21.5 | 53.0 | 53.0 | 44.0 |
| | emulsifier concentration | % by mass | 3.1 | 3.1 | 3.1 | 3.1 | 3.1 | 3.1 | 3.1 | 3.1 | 3.1 | 2.3 | 0.9 | 3.1 | 3.1 | 2.7 |
| Evaluation | Mechanical stability | % | 0.656 | 0.152 | 0.036 | 0.040 | 0.020 | 0.013 | 0.358 | 1.528 | 4.668 | 2.361 | <0.010 | 10.000 | 0.814 | 0.056 |
| | Aggregates amount of in polymerization solution | % | 0.112 | 0.423 | 0.120 | 0.007 | 0.323 | 0.030 | 0.853 | 1.210 | 1.356 | 1.123 | 0.032 | 1.653 | 1.560 | 0.021 |
| | Concentration time required to reach target solids content | hrs | 0 | 0 | 0 | 0 | 0 | 0 | 0 | 0 | 0 | 0 | 13.3 | 0 | 0 | 4 |

**Claims**

1. A method for producing a chloroprene-based polymer composition containing chloroprene-based polymer, comprising a polymerization step, wherein:

   in the polymerization step, chloroprene, or chloroprene and a monomer copolymerizable with chloroprene, are polymerized until reaching polymerization completion conversion;
   the polymerization step includes a monomer addition step and an emulsifier addition step,
   when a total amount of monomer used in the polymerization step is 100%, an initial addition amount of monomer at start of polymerization is X%;
   in the monomer addition step, when the initial addition amount of the monomer is 100%, a remaining monomer is added to the polymerization system from time when polymerization progresses and Y% of the monomer initially added converts, by reaching the polymerization completion conversion;
   in the emulsifier addition step, when the total amount of monomer used in the polymerization step is 100%, emulsifier is added from time when polymerization progresses and Z% of the monomer converts by reaching the polymerization completion conversion; and
   X, Y and Z satisfy following relationship.

$$1 \leq XY/100 \leq 40$$

$$20 \leq Z \leq 75$$

$$-65 \leq Y\text{-}Z \leq 50$$

2. The method for producing the chloroprene-based polymer composition of Claim 1, wherein:

   monomer concentration in a reaction solution at start of polymerization is less than 55.0% by mass;
   emulsifier concentration in the reaction solution at start of polymerization is 0.1 to 5.7% by mass;
   chloroprene-based polymer concentration in a polymerization solution at end of polymerization is 45.0% by mass or more; and
   emulsifier concentration in the polymerization solution at end of polymerization is 2.4% by mass or more.

3. The method for producing the chloroprene-based polymer composition of Claim 1 or 2, wherein the emulsifier comprises an alkali metal salt of rosin acid containing any one of dehydroabietic acid and dehydroabietic acid salt.

4. A chloroprene-based polymer composition obtained by the method for producing the chloroprene-based polymer composition of any one of Claims 1 to 3.

5. An immersion molded body comprising the chloroprene-based polymer composition of Claim 4.

6. The immersion molded body of Claim 5, wherein the immersion molded body is a glove, a balloon, a catheter or a boot.

7. A method for producing an immersion molded body, comprising a step of immersion-molding the chloroprene-based polymer composition obtained by the method for producing the chloroprene-based polymer composition of any one of Claims 1 to 3.

## INTERNATIONAL SEARCH REPORT

| International application No. |
|---|
| **PCT/JP2022/013537** |

**A.    CLASSIFICATION OF SUBJECT MATTER**

*C08F 2/24*(2006.01)i; *B29C 41/14*(2006.01)i; *B29C 41/36*(2006.01)i; *C08F 2/00*(2006.01)i; *C08F 36/18*(2006.01)i
FI:   C08F2/24 Z; C08F36/18; C08F2/00 A; B29C41/14; B29C41/36

According to International Patent Classification (IPC) or to both national classification and IPC

**B.    FIELDS SEARCHED**

Minimum documentation searched (classification system followed by classification symbols)

C08F2/24; B29C41/14; B29C41/36; C08F2/00; C08F36/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | JP 2000-290323 A (TOSOH CORP.) 17 October 2000 (2000-10-17) claims, paragraphs [0022], [0028], examples | 1-4 |
| Y | | 5-7 |
| Y | JP 2012-219204 A (DENKI KAGAKU KOGYO KK) 12 November 2012 (2012-11-12) paragraph [0002] | 5-7 |
| Y | JP 2015-183183 A (DENKI KAGAKU KOGYO KK) 22 October 2015 (2015-10-22) paragraph [0002] | 5-7 |
| A | JP 2009-155535 A (TOSOH CORP.) 16 July 2009 (2009-07-16) claims, examples | 1-7 |
| A | CN 103059185 A (SHANXI SYNTHETIC RUBBER GROUP CO., LTD.) 24 April 2013 (2013-04-24) claims, examples | 1-7 |
| A | JP 2004-204147 A (NIPPON A&L INC.) 22 July 2004 (2004-07-22) claims, examples | 1-7 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/013537**

| Patent document cited in search report | | | Publication date (day/month/year) | Patent family member(s) | | | Publication date (day/month/year) |
|---|---|---|---|---|---|---|---|
| JP | 2000-290323 | A | 17 October 2000 | (Family: none) | | | |
| JP | 2012-219204 | A | 12 November 2012 | (Family: none) | | | |
| JP | 2015-183183 | A | 22 October 2015 | WO | 2015/145867 | A1 | |
| | | | | CN | 106132998 | A | |
| JP | 2009-155535 | A | 16 July 2009 | (Family: none) | | | |
| CN | 103059185 | A | 24 April 2013 | (Family: none) | | | |
| JP | 2004-204147 | A | 22 July 2004 | (Family: none) | | | |

Form PCT/ISA/210 (patent family annex) (January 2015)

**EP 4 286 419 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4238021 B